# EUROPEAN PATENT SPECIFICATION

(11) **EP 1 544 722 B1**
(45) Date of publication and mention of the grant of the patent: **26.06.2013**
(21) Application number: 04020142.8
(22) Date of filing: 25.08.2004
(51) Int. Cl.: G06F 3/12

(54) **Image forming apparatus**
Bilderzeugungsgerät
Dispositif de formation d'images

(30) Priority: 17.12.2003 JP 2003419443
(43) Date of publication of application: 22.06.2005
(73) Proprietor: Konica Minolta Business Technologies, Inc., Tokyo 100-0005 (JP)
(72) Inventor: Honma, Mikimasa Konica Minolta Business Tech.,Inc., Hachioji-shi Tokyo, 192-8505 (JP); Haga, Tatsuyoshi Konica Minolta Business Tech. Inc, Hachioji-shi Tokyo, 192-8505 (JP)
(74) Representative: Wenning, Ekkehard

(56) References cited:
- JP-A- 2001 001 596
- US-A1- 2003 053 810
- US-B1- 6 239 880
- ANUPAM V ET AL: "Shastra: multimedia collaborative design environment", IEEE MULTIMEDIA, IEEE SERVICE CENTER, NEW YORK, NY, US, vol. 1, no. 2, 1 July 1994 (1994-07-01), pages 39-49, XP011420386, ISSN: 1070-986X, DOI: 10.1109/93.311655

## Description

### BACKGROUND OF THE INVENTION

The present invention relates to a copying machine, a printer, a facsimile or a composite machine thereof (hereinafter referred to as "image forming apparatus").

Recent years have seen the development of a system that allows remote control of an image forming apparatus from such a remote operation apparatus as a personal computer via the communications network (e.g. Patent Documents 1 and 2).

In such a system, an operator operates the remote operation apparatus and selects the data to be printed (including image data, text data; hereinafter referred to as "print data") and the print conditions. Then a print job is created by the remote operation apparatus, and is sent to the image forming apparatus. The print job includes the selected print data and attribute information (hereinafter referred to as "job ticket") with the print conditions described thereon. When the print job is sent from the remote operation apparatus, the image forming apparatus associates it with the print data, and the job ticket thereof is stored and placed under management. Further, the print job created according to the print instruction inputted through the operation section arranged on the main body of the image forming apparatus (hereinafter referred to as "main-body operation section") is stored and placed under management, and the image forming apparatus starts printing operation in the order in which the print jobs have been inputted.
[Patent Document 1] US. Patent No.6,213,652
[Patent Document 2] US. Patent No.6,466,327

In the aforementioned prior art system, when there is a change in print conditions such as the number of prints, editing of the job ticket (attribute information) is possible through the remote operation apparatus, however, there is nothing disclosed whether editing by the image forming apparatus main body is possible or not.

The object of the present invention is to provide an image forming apparatus that ensures stable editing when the job ticket of the same job is edited by different ways.

US 2003/053810 A1 discloses a method of detecting mismatches between print job attributes and printer resources, and if the mismatch is detected, notifying the operator the occurrence of the mismatch and allowing the operator to rework the editing of the print job attributes.

Furthermore, JP 2001 001596 A discloses that when the same editing function is capable of being set through both of a document producing apparatus and a printer driver, a display is set so that the setting of the editing function will not be effected through the printer driver.

### SUMMARY OF THE INVENTION

According to the present invention the above object is achieved by the image forming apparatus according to claim 1. The dependent claims are directed to different advantageous aspects of the invention.

### BRIEF DESCRIPTION OF THE DRAWINGS

Fig. 1 is a drawing representing the configuration of an image forming system 100 as an embodiment of the present invention;
Fig. 2 is a drawing representing the internal configuration of a remote operation apparatus 10;
Fig. 3 is a drawing representing the internal configuration of an image forming apparatus 50;
Fig. 4 is a flowchart representing the processing of remote-priority editing to be applied in the remote-priority editing mode;
Fig. 5 is a drawing showing an example of a job list sent from the image forming apparatus 50 to the remote operation apparatus 10;
Fig. 6 is a drawing showing an exampled of a warning message displayed on the image forming apparatus 50 during the process of editing the job ticket by the remote operation apparatus 10;
Fig. 7 is a drawing showing an example of the message notifying the result of editing the job ticket, displayed on the image forming apparatus 50, where (a) represents a message for reporting successful editing, while (b) represents a message for reporting an editing failure;
Fig. 8 is a drawing showing the processing of remote-priority editing to be applied in the main-body-priority editing mode; and
Fig. 9 is a drawing showing an exampled of a warning message displayed on the image forming apparatus 50 during the process of editing the job ticket by the remote operation apparatus 10; and
Fig. 10 is a drawing showing an example of editing screen of the job ticket.

### DETAILED DESCRIPTION OF THE PREFERRED EMBODIMENT

The aforementioned object of the present invention is further achieved by the following configurations:
(11) An image forming apparatus linked for communication with a remote operation apparatus for printing print data according to the job ticket indicating the print conditions, wherein the aforementioned image forming apparatus comprises: a memory section for storing the job ticket corresponding to the print data; a main-body operation section, arranged on the main body of the image forming apparatus, for editing the job ticket stored in the aforementioned memory section; a control section for controlling editing of one and the same job ticket by the aforementioned remote operation apparatus and the aforementioned main-body operation section.
(12) The image forming apparatus described in (11) wherein an instruction is possible to be provided to place priority on either editing by the aforementioned remote operation apparatus or editing by the aforementioned main-body operation section.
(13) The image forming apparatus described in (12) wherein, when an instruction is provided to place priority on editing by the aforementioned remote operation apparatus, and the main-body operation section has applied processing of editing to the job ticket being edited or having been edited by the remote operation apparatus, then the aforementioned control section issues a warning to notify that the job ticket is being edited by the remote operation apparatus.
(14) The image forming apparatus described in (13) wherein the aforementioned control section issues a warning to notify that the job ticket is being edited by the remote operation apparatus, and editing of this job ticket by the main-body operation section is disabled.
(15) The image forming apparatus described in (12) wherein, when an instruction is provided to place priority on editing by the aforementioned main-body operation section, and the remote operation apparatus has applied processing of editing to the job ticket being edited or having been edited by the main-body operation section, the aforementioned control section disables that editing.
(16) The image forming apparatus described in one of (11) through (15) wherein the aforementioned control section reports the result of editing the job ticket to the aforementioned remote operation apparatus.
(17) The image forming apparatus described in one of (11) through (16) wherein, when editing of a job ticket is requested by the remote operation apparatus, the information on the list of job tickets that can be edited by the remote operation apparatus is reported to the remote operation apparatus by the aforementioned control section.

According to the invention described in (11), editing of one and the same job ticket is placed under control in such a way as to avoid a mutual interference of editing of one and the same job ticket by the remote operation apparatus and that by the main-body operation section, thereby ensuring stable editing.

According to the invention described in (12), an instruction can be provided to place priority on either editing by the aforementioned remote operation apparatus or editing by the aforementioned main-body operation section. This arrangement permits a desired selection between the two modes in conformity to the operation status of an image forming apparatus.

According to the invention described in (13), when priority is placed on editing by the remote operation apparatus and the main-body operation section has applied processing of editing to the job ticket being edited or having been edited by the remote operation apparatus, then a warning is issued to notify that the job ticket is being edited by the remote operation apparatus. This allows the operator of the image forming apparatus to know that editing has been performed by an operator of the remote operation apparatus.

According to the invention described in (14), control is so provided that a warning is issued, and at the same time, editing by the remote operation apparatus alone is enabled. This arrangement prevents the edit operations of one and the same job ticket from interfering with each other.

According to the invention described in (15), when an instruction is provided to place priority on editing by the main-body operation section, and the remote operation apparatus has applied processing of editing to the job ticket being edited or having been edited by the main-body operation section, control is made in such a way that editing by the remote operation apparatus is disabled, and only editing by the main-body operation section is enabled. This arrangement prevents the edit operations of one and the same job ticket from interfering with each other.

According to the invention described in (16), the result of editing the job ticket is reported to the remote operation apparatus. This arrangement allows the operator of the remote operation apparatus to check if the editing of the job ticket performed on the remote operation apparatus has been successful or not. This prevents printing from being carried out under the print conditions not intended by the operator.

According to the invention described in (17), the information on the list of job tickets that can be edited by the remote operation apparatus is reported to the remote operation apparatus. A list eliminating the job ticket currently being printed or other job tickets that cannot be edited is sent to the remote operation apparatus. This arrangement avoids the cases where, even if an attempt is made to edit the job ticket that cannot be edited by the remote operation apparatus, editing is not performed in conformity to edit operation on the image forming apparatus; and prevents printing from being carried out under the print conditions not intended by the operator.

### DESCRIPTION OF THE EMBODIMENT

The image forming apparatus in the present embodiment is arranged to provide two alternative modes; a remote-priority editing mode where priority is given to the editing by a remote operation apparatus, and a main-body-priority editing mode where priority is given to the editing by a main-body operation section of an image forming apparatus. Either of these modes can be selected. The following describes an example of controlling the editing of one and the same job ticket in conformity to the selected mode. To put it another way, the following arrangement will be described: When the remote-priority editing mode has been selected, editing by the main-body operation section of the image forming apparatus is disabled if it is applied to the job ticket being edited or having been edited by the remote operation apparatus. By contrast, when the main-body-priority editing mode has been selected, editing by the remote operation apparatus is disabled if it is applied to the job ticket being edited or having been edited by the main-body operation section, whereby edit operations are adjusted.

In the first place, the configuration will be described:

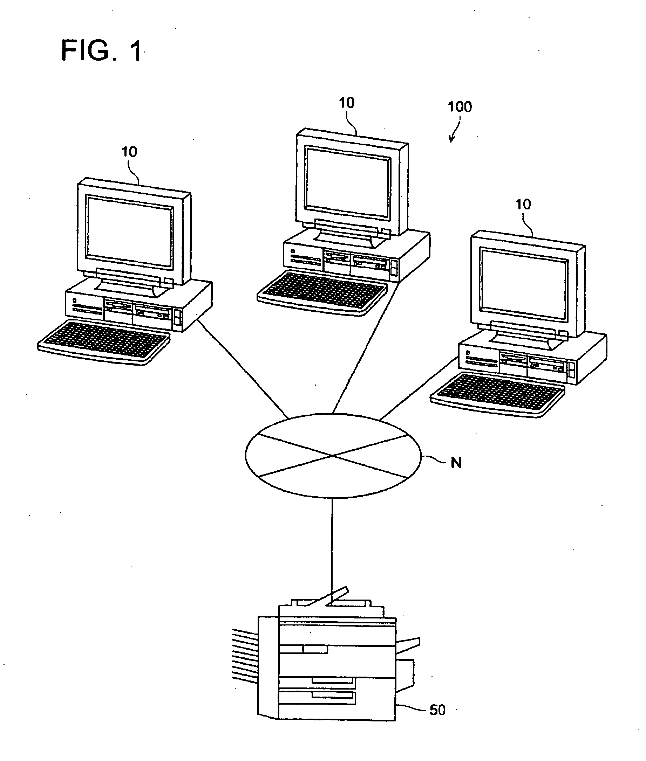

Fig. 1 is a drawing representing the configuration of an image forming system 100 in the present embodiment.

As shown in Fig. 1, the image forming system 100 has a remote operation apparatus 10 and an image forming apparatus 50. These apparatuses are connected via the communications network N to exchange information. Fig. 1 shows an example of three remote operation apparatuses 10 and one image forming apparatus 50 connected with each other. However, there is no restriction to the number of the apparatuses.

Each apparatus will be explained below:

The remote operation apparatus 10 transmits information on print job and operation instructions such as an edit instruction of the job ticket contained in the print job to the image forming apparatus 50, thereby remote-controlling the image forming apparatus 50. For example, such an information processing apparatus as a general-purpose personal computer is applicable.

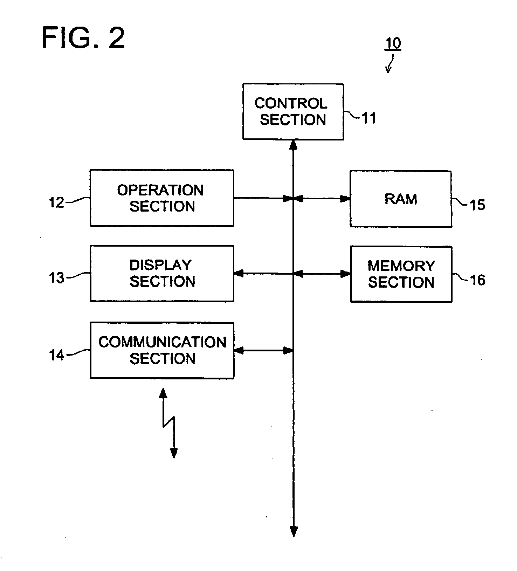

Fig. 2 shows the internal configuration of a remote operation apparatus 10.

As shown in Fig. 2, the remote operation apparatus 10 includes a control section 11, an operation section 12, a display section 13, a communication section 14, a RAM (Random Access Memory) 15 and a memory section 16.

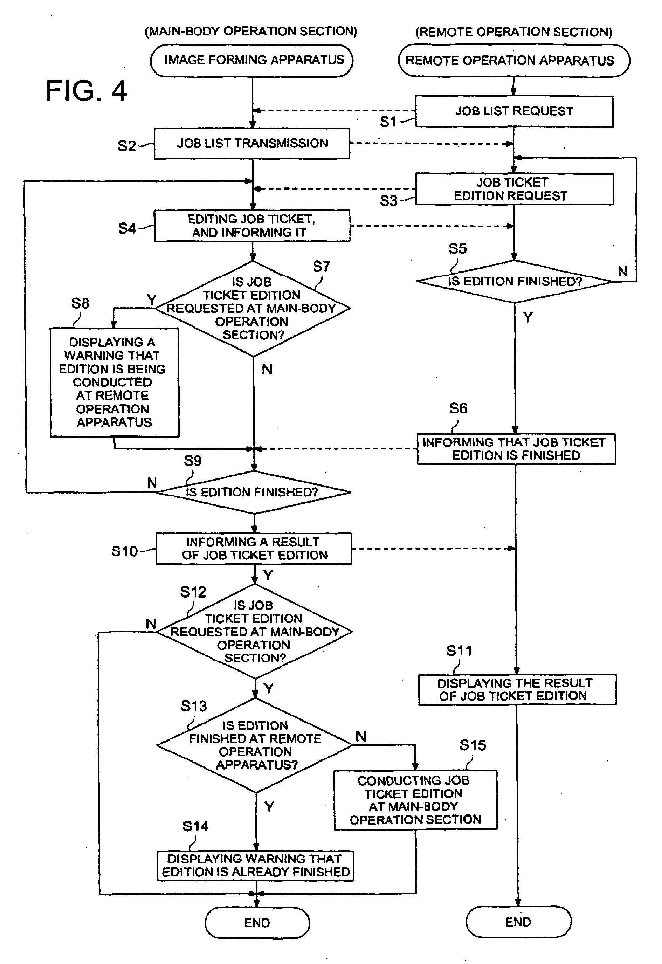

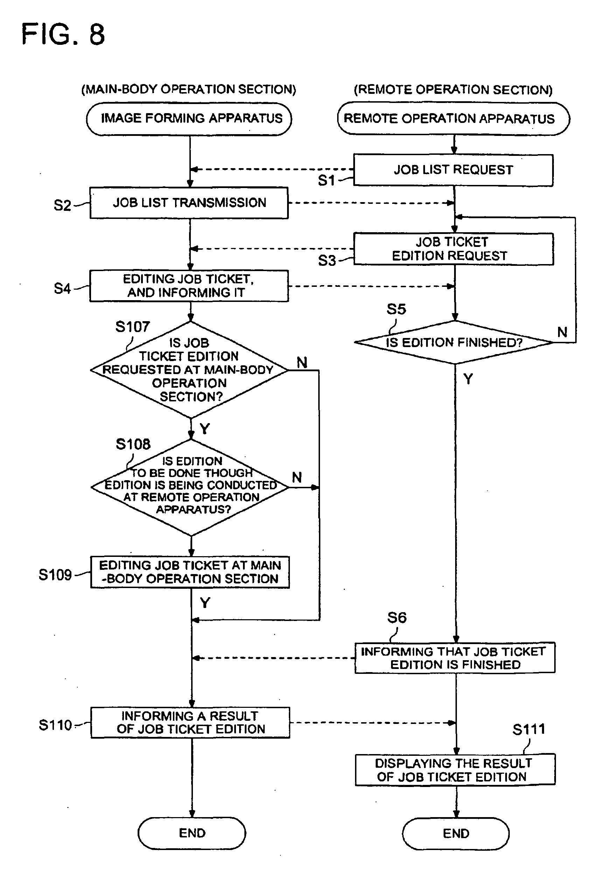

The control section 11 contains a CPU (Central Processor Unit) and others. In addition to the system program stored in the memory section 16, remote-priority editing program (Fig. 4) related to the present invention and main-body-priority editing program (Fig. 8) are unfolded on the RAM 15. Thus, the control section 11 controls the processing operation in a comprehensive manner in collaboration with these programs.

The control section 11 creates the print job in response to the operation instruction inputted through the operation section 12. The print job contains print data and a job ticket. The created print job are sent to the image forming apparatus 50 through the communication section 14, and the printing operation of the image forming apparatus 50 is remote-controlled.

Further, in the remote-priority editing and main-body-priority editing, a request is issued to edit the job ticket stored in the image forming apparatus 50. To put it more specifically, request information for requesting the job ticket to be edited and various pieces of control information are generated and are sent to the image forming apparatus 50 through the communication section 14.

The operation section 12 consists of a keyboard and mouse for inputting operation instructions, and supplies the control section 11 with the operation signal corresponding to the key having been operated.

The display section 13 contains an LCD (liquid crystal display) and others. In conformity to the instruction from the control section 11, it shows various display screens such as a selection screen for selecting the print data and print conditions, an edit screen for editing the job ticket, and a communication screen for reporting the result of editing of the job ticket having been notified by the image forming apparatus 50.

The communication section 14 consists of a communications interface such as a Network Interface Card (hereinafter referred to as "NIC") and a modem, and exchanges information with the external equipment on the communications network N. For example, it sends the job ticket edit request information to the image forming apparatus 50 and receives the information on the result of editing the job ticket from the image forming apparatus 50.

The RAM 15 provides a work area for temporary storage of various programs to be run by the control section 11 and the data related to these programs.

The memory section 16 stores a remote-priority editing program, main-body-priority editing program and data processed by various programs, in addition to the system program.

The following describes the image forming apparatus 50:

The image forming apparatus 50 stores the print job created in conformity to the operation instruction from the operation section of the main body of the image forming apparatus, or the print job sent from the remote operation apparatus 10, and performs printing of the stored print job.

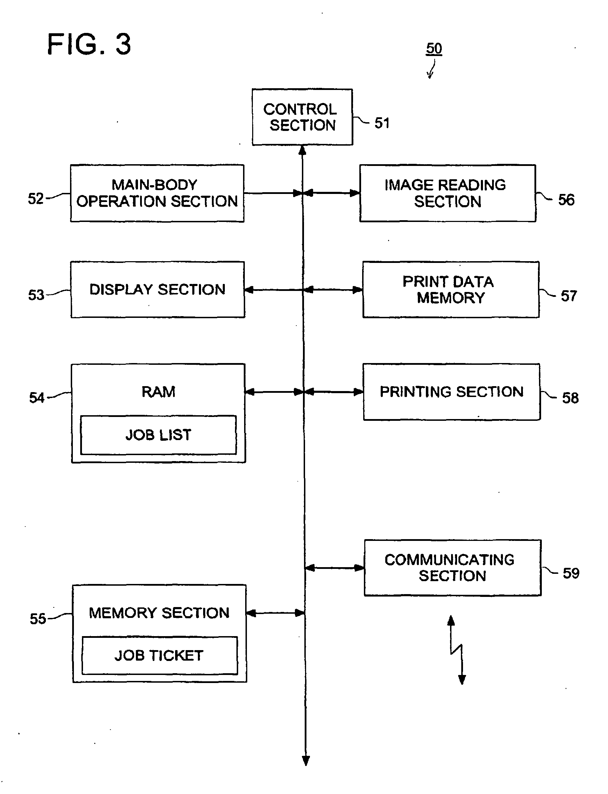

Fig. 3 shows the internal configuration of an image forming apparatus 50.

As shown in Fig. 3, the image forming apparatus 50 consists of a control section 51, a main-body operation section 52, a display section 53, a RAM 54, a memory section 55, an image reading section 56, a print data memory 57, a printing section 58 and a communicating section 59.

The control section 51 unfolds the printing program stored in the memory section 55, on the RAM 54 and controls the printing operation in a comprehensive manner in collaboration with the program. For example, when a newly created print job has been inputted, the print data contained in the print job is stored in the print data memory 57, and the job ticket is stored in the memory section 55. In response to the instruction from the main-body operation section 52, the control section 51 selects the copy mode, printer mode or scanner mode, and controls the print data processing, copying, printing and reading of image data.

The control section 51 controls the editing of one and the same job ticket, and edits the job ticket in response to the edit operation by the main-body operation section 52 or editing by the remote operation apparatus 10. When the remote-priority editing mode is selected as a job ticket edit mode, the remote-priority editing program stored in the memory section 55 is read out and is unfolded on the RAM 14. The control section 51 controls the processing operation in a comprehensive manner in collaboration with the related program. On the other hand, when the main-body-priority editing mode is selected, the main-body-priority editing program is read out and is unfolded on the RAM 14. The control section 51 controls the processing operation in a comprehensive manner in collaboration with the related program.

In response to a job ticket editing request issued from the remote operation apparatus 10, the control section 51 creates a list of job tickets that can be edited by the remote operation apparatus 10 and sends it to the remote operation apparatus 10 through the communicating section 59, whereby the list information is reported.

In the remote-priority editing mode, in response to the request for editing the job ticket (including the one not yet edited or already edited) stored in the memory section 55 from the remote operation apparatus 10, editing is applied to the job ticket for which editing has been requested. When a request is issued through the main-body operation section 52 to edit the job ticket being edited or having been edited by the remote operation apparatus 10, a warning message is displayed on the display section 53 to warn that the job ticket is being edited or having been edited by the remote operation apparatus 10. Then editing by the main-body operation section 52 is disabled. The job ticket is edited in response to the editing by the remote operation apparatus 10 and the edited job ticket is stored in the memory section 55 as updated data. When a request is issued to use the remote operation apparatus 10 to edit the job ticket currently being edited by the main-body operation section 52, editing by the main-body operation section 52 is disabled. Then the job ticket is edited in response to the edit operation by the remote operation apparatus 10 and is stored into the memory section 55 as updated data.

In the main-body-priority editing mode, in response to the request for editing the job ticket (including the one not yet edited or already edited) stored in the memory section 55 from the main-body operation section 52, editing is applied to the job ticket for which editing has been requested. When a request is issued through the remote operation apparatus 10 to edit the job ticket being edited or having been edited by the main-body operation section 52, editing by the remote operation apparatus 10 is disabled. A message is created to report editing failure and is sent to the remote operation apparatus 10 through the communicating section 59. When a request is issued to use the main-body operation section 52 to edit the job ticket currently being edited by the remote operation apparatus 10, a message is created to report editing failure and is sent to the remote operation apparatus 10, wherein the job ticket edited in response to the edit operation by the remote operation apparatus 10 is not stored into the memory section 55.

The main-body operation section 52 contains a group of keys such as function keys and numeric keys and the touch panel arranged integrally with the display section 53, for setting the print conditions such as number of prints, type of paper, duplex/simplex printing mode and magnification factor, and sends the operation signal corresponding to the operated key to the control section 51.

The display section 53 is composed of an LCD and others, and a setting screen for setting the print conditions in conformity to the instruction from the control section 51, a job ticket edit screen and a communication screen for reporting the result of editing of the job ticket.

The RAM 54 provides a work area for temporary storage of various programs to be run by the control section 51 and the data related to these programs.

Further, the RAM 54 contains the job list where information on the stored print job is formulated in the form of a list in such a manner that the list can be updated. In the job list, for example, the following information is stored in the order of printing in the associated form; the print job name, the name of a user as a source of sending the print job, print data file name, data file name of the job ticket showing the print conditions of the print data, and the current status of the print job (e.g. "Waiting for print" if print data is being received; "Finished the edition" if the job ticket has been edited).

The memory section 55 stores the remote-priority editing program, main-body-priority editing program and data processed by various programs, in addition to the printing program.

Further, the memory section 55 has a memory area for storing the job ticket data file.

The image reading section 56 comprises a light source and a photoelectric conversion device such as a CCD (charge coupled device) on the lower portion of the contact glass, and provides optical scanning of the document placed on the contact glass. After the reflected light has undergone photoelectric conversion by the CCD, it is converted into digital form, whereby the document image data is obtained. The document image data is stored in the print data memory 57 as print data.

The print data memory 57 is a memory for storing the print data to be outputted, such as the image data scanned by the image reading section 56 and print data received through the communicating section 59 from the remote operation apparatus 10. The print data need not always be so configured as to be sent from the remote operation apparatus 10 together with the job ticket; it can be the print data obtained from the storage location specified by the job ticket (e.g. data stored in the server).

The printing section 58 has a sheet feed section (not illustrated) for feeding the various kinds of printing paper. Based on the print data specified by the control section 51 to be printed, the specified printing paper is printed. Printing can be performed by any method - electrophotographic or inkjet method.

The communicating section 59 has a communications interface such as NIC and modem, and exchanges information with the external equipment on the communications network N. For example, it receives the job ticket edit request information from the remote operation apparatus 10, and sends the information on the result of editing the job ticket to the remote operation apparatus 10.

The operation in the present embodiment will be described below:

In the present embodiment, editing of the job ticket is controlled in two methods; control of editing for the remote-priority editing mode, and control of editing for the main-body-priority editing mode. These two control methods will be described: The following description is based on the assumption that either the remote-priority editing mode or main-body-priority editing mode is set in advance as a default mode.

Referring to Fig. 4, let us assume that remote-priority editing mode is preset.

Fig. 4 is a flowchart representing the processing of remote-priority editing to be applied by the image forming apparatus 50 and remote operation apparatus 10. In the following description, the remote operation apparatus 10 may be called the remote operation section, while the main-body operation section 52 of the image forming apparatus 50 may be termed the main-body operation section.

In the remote-priority editing shown in Fig. 4, the job ticket edit instruction is inputted through the operation section 12 in the remote operation apparatus 10. The job list request information is created by the control section 11 and is sent to the image forming apparatus 50 (Step S1). When the job list request information has been received from the remote operation apparatus 10 in the image forming apparatus 50, the job list is read from the RAM 54 by the control section 51. The job list consisting of only the print jobs having job tickets that can be edited by the remote operation apparatus 10 is re-edited, and this re-edited job list is sent to the remote operation apparatus 10 (Step S2). For example, the job ticket of the print job currently being printed cannot be edited, and therefore such a print job is eliminated from the job list.

In the present embodiment, an example of requesting the job list of the print job containing the job ticket has been described above. It is also possible to make such arrangements that a list consisting of only the job tickets - not the entire print job - is requested.

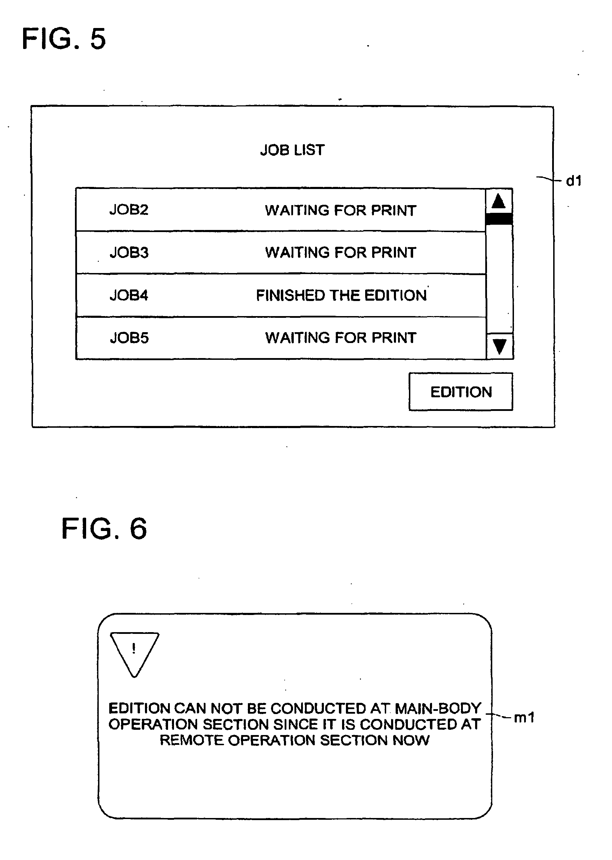

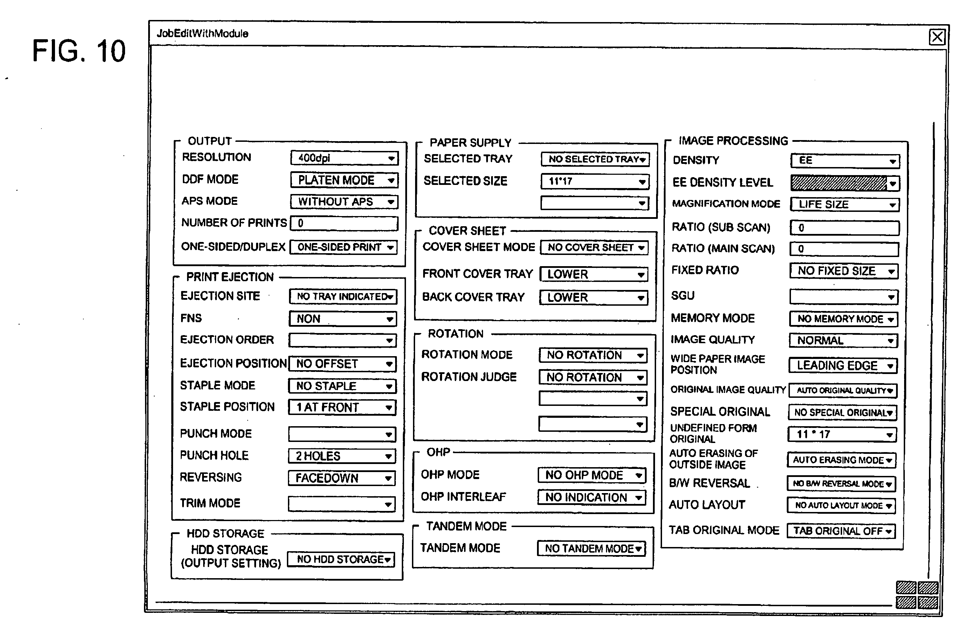

In the remote operation apparatus 10, based on the job list sent from the image forming apparatus 50, the list screen d1 is indicated on the display section 13, as shown in Fig. 5. The print job for editing the job ticket is selected from the job list displayed by the operator. When editing has been specified by the edit key, the job ticket edit screen (shown in Fig. 10) appears. On this edit screen, the operator changes the settings for such items as the number of prints and print method, and edits the job ticket. In the remote operation apparatus 10, the control section 11 generates the job ticket request information for every edit operation for one item through the operation section 12, and this information is sent to the image forming apparatus 50 (Step S3).

In the image forming apparatus 50, when the job ticket request information has been received from the remote operation apparatus 10, the relevant job list is read from the memory section 55, and is stored in the RAM 54 on a temporary basis. Based on the edit request information having been received, the setting of the job ticket stored in the RAM 54 on a temporary basis is changed by the control section 51, and editing is carried out. Upon completion of editing for one item, a message is generated to report that editing has been done by the control section 51 and is sent to the remote operation apparatus 10 (Step S4).

In the remote operation apparatus 10, editing by the operation terminates. On the edit screen, evaluation is made to determine whether or not editing has been terminated for each item, according to whether or not an instruction has been given to store the job ticket (Step S5). If no instruction has been given to store the job ticket, and editing has not yet terminated (Step S5; N), the system goes back to the processing in S3, and editing is started for the next item. In the meantime, if an instruction has been given store the job ticket and editing has been terminated (Step S5; Y), a message for reporting the termination of editing the job ticket is generated by the control section 11 and is sent to the image forming apparatus 50 through the communication section 14 (Step S6).

In the image forming apparatus 50, in response to the request from the remote operation apparatus 10, job ticket edit menu is selected from the print menu through the main-body operation section 52 during editing of the job ticket. Then evaluation is made to determine whether or not editing of the job ticket currently being edited has been requested (Step S7). If there is a request for edited through the main-body operation section 52 (Step S7; Y), priority is given to the edit operation by the remote operation apparatus 10, since the remote-priority editing mode has been set. As shown in Fig. 6, a warning message m1 appears on the display section 53 to notify that editing is currently in progress by the remote operation apparatus 10 (remote operation section) and editing by the main-body operation section 52 (main-body operation section) is disabled (Step S8). Thus, the editing by the main-body operation section 52 is disabled. After the message has been displayed, the system proceeds to the Step S9.

On the other hand, when editing is required through the control section 51 (Step S7; N), evaluation is made to determine whether editing is to be terminated or not, based on whether a job ticket edit termination message has been received from the remote operation apparatus 10 or not (Step S9). If the message for reporting termination of editing has not yet received and editing does not terminate (Step S9; N), the system goes back to the processing of Step S4, and editing is repeated based on the job ticket editing request information sent from the remote operation apparatus 10. On the other hand, when the message reporting the termination of editing has been received and editing is to be terminated (Step S9; Y), the edited job ticket is read from the RAM 54 and is stored in the memory section 55 as updated data. Then a message reporting the result of editing the job ticket is generated and is sent to the remote operation apparatus 10 (Step S10).

In the remote operation apparatus 10, based on the message reporting the result of editing the job ticket sent from the image forming apparatus 50, the result screen for showing the result of editing the job ticket is displayed on the display section 13 (Step S11).

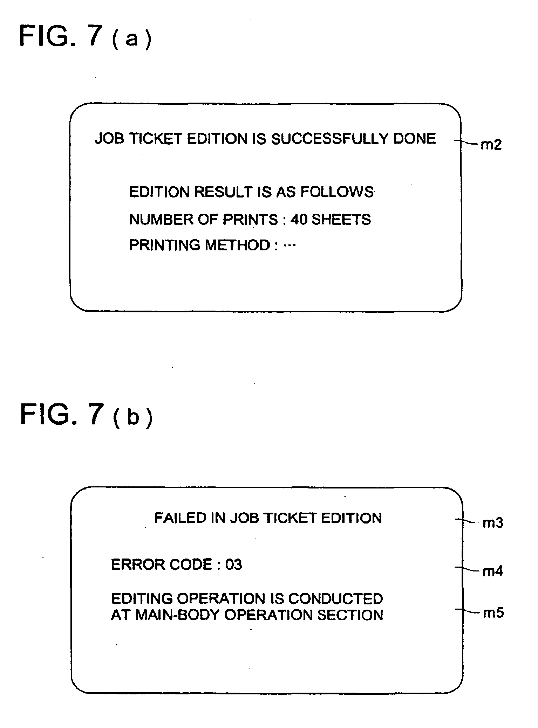

For example, when editing has been carried out correctly based on the edit operation on the remote operation apparatus 10, a message m2 is displayed on the result screen to notify that job ticket has been successfully edited, as shown in Fig. 7 (a). If correct editing cannot be performed and an editing error has occurred due to a communications error or the edit operation having been performed on the image forming apparatus 50, then a message is displayed to the effect that the job ticket edit failure has occurred.

In the image forming apparatus 50, when the message showing the result of editing the job ticket has been sent, editing of any one of job tickets stored in the memory section 55 is selected from the print menu through the main-body operation section 52. Evaluation is made to determine whether editing of the job ticket has been requested or not (Step S12). When editing is not requested through the main-body operation section 52 (Step S13; N), this processing terminates. When editing is requested through the main-body operation section 52 (Step S12; Y), evaluation is made to determine whether or not the job ticket for which editing is requested has been edited by the edit operation of the remote operation apparatus 10 (Step S13).

If the job ticket has already been editing by the operation of the remote operation apparatus 10 (Step S13; Y), priority is given to the edit operation by the remote operation apparatus 10, since the remote-priority editing mode has been set. A warning message (not illustrated) appears on the display section 13 to notify that editing has already been performed by the remote operation apparatus 10 and editing by the image forming apparatus 50 (Step S14); then the processing terminates.

If editing by the remote operation apparatus 10 is not started (Step S13; N), the job ticket selected in response to the edit operation by the main-body operation section 52 is edited (Step S15), and the processing terminates.

The aforementioned description refers to the case where a request is issued through the main-body operation section 52 to edit the job ticket being edited or having been edited by the remote operation apparatus 10. Conversely, when a request is issued through the remote operation apparatus 10 to edit the job ticket having been edited by the main-body operation section 52, priority is given to the edit operation by the remote operation apparatus 10, and editing is performed in response to the request for editing from the remote operation apparatus 10. The edited job ticket is stored in the memory section 55 as new data.

Referring to Fig. 8, the following describes the control of the job ticket edit operation when the main-body-priority editing mode has been set.

Fig. 8 is a drawing showing the processing of main-body-priority editing to be applied by the image forming apparatus 50 and remote operation apparatus 10.

In the operation of main-body-priority editing shown in Fig. 8, processing from Steps S1 through S6 is carried out in the first place. Processing from Steps S1 through S6 will not be described since it is the same as the processing from Steps S1 through S6 described with reference to the remote-priority editing mode shown in Fig. 7. Accordingly, the following description will start from Step S107. In Steps S1 through S6, the job ticket is edited in response to the edit operation by the remote operation apparatus 10.

In Step S107, in the image forming apparatus 50, the job ticket edit menu is selected from the print menu through the main-body operation section 52 during editing of the job ticket in response to the request from the remote operation apparatus 10, and evaluation is made to determine whether or not there is any request to edit the job ticket currently being edited. If there is no request for editing issued through the main-body operation section 52 (Step S107; N), the system goes to the processing in Step S110 to be described later.

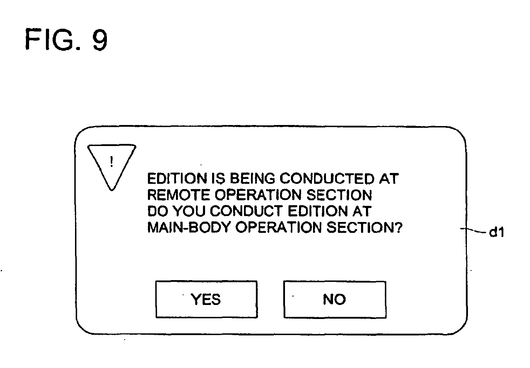

If there is a request for editing through the main-body operation section 52 (Step S107; Y), the job ticket for which editing has been requested is currently being edited by the remote operation apparatus 10 (remote operation section), as shown in Fig. 9. A selection screen d1 appears on the display section 53 to select whether or not edit operation from the image forming apparatus 50 (main-body operation section) should be performed. On this selection screen d2, evaluation is made to determine whether or not the instruction has been inputted to perform editing (Step S108).

If there is an instruction to perform editing (Step S108; Y), priority is given to the edit operation by the main-body operation section 52 since the main-body-priority editing mode is set. Editing by the remote operation apparatus 10 is disabled and a job ticket edit screen appears on the display section 53. If an instruction for edit operation has been inputted through the main-body operation section 52 by the operator for each of the items such as the number of prints and printing method on this edit screen, the job ticket is edited by the control section 11 for every input of the instruction for edit operation for one item (Step S109).

When edit operation by the main-body operation section 52 terminates on the edit screen and an instruction is given to store the job ticket, then the job ticket edit operation terminates. The job ticket edited by the main-body operation section 52 is stored in the memory section 55 as new data. In this case, the job ticket having been edited by the remote operation apparatus 10 is removed from the RAM 54, without being stored. The information for reporting the result of editing the job ticket is generated by the control section 51 and is sent to the remote operation apparatus 10 (Step S110).

In the remote operation apparatus 10, a result screen showing the result of editing the job ticket appears on the display section 13 (Step S111), according to the message, showing the result of editing the job ticket, sent from the remote operation apparatus 10. For example, when the edit operation by the main-body operation section 52 of the image forming apparatus 50 is not performed and normal editing cannot be performed in response to the edit operation of the remote operation apparatus 10, then a message m2 appears to indicate that the job ticket edit operation has been successful, as shown in Fig. 7 (a). If the job ticket being edited or having been edited in the remote operation apparatus 10 is edited by the main-body operation section 52 and editing in response to the edit operation by the remote operation apparatus 10 has not been performed, then a message m3 appears to notify that a job ticket edit failure has occurred, as shown in Fig. 7 (b), and at the same time, its error code m4 and reason message m5 indicating the cause of that error are displayed. When the result of editing has appeared, the processing terminates.

The aforementioned description refers to the case where a request is issued through the main-body operation section 52 to edit the job ticket being edited by the remote operation apparatus 10. When a request is issued from the image forming apparatus 50 to edit the job ticket having been edited by the remote operation apparatus 10, the job ticket is edited in response to the edit operation of the image forming apparatus 50 and the edited job ticket is stored in the memory section 55 as updated data.

When a request is issued from the remote operation apparatus 10 to edit the job ticket being edited or having been edited by the image forming apparatus 50, the edit operation by the remote operation apparatus 10 is disabled so that editing is not performed. A message is sent to the remote operation apparatus 10 to notify the edit failure, since the job ticket is being edited or has been edited by the main-body operation section 52.

As described above, according to the present embodiment, when the remote-priority editing mode is selected, priority is given to the edit operation by the remote operation apparatus 10. If a request is issued from the main-body operation section 52 of the image forming apparatus 50, control is provided in such a manner that a warning message appears to disable edit operation by the main-body operation section 52. This arrangement avoids interference between the edit operation by the remote operation apparatus 10 and that by the image forming apparatus 50. Further, the warning message allows the operator of the image forming apparatus 50 to recognize that editing has been done by the remote operation apparatus 10.

Further, when the main-body-priority editing mode is selected, priority is given to the edit operation by the main-body operation section 52. If the remote operation apparatus 10 starts to edit the job ticket being edited or having been edited by the main-body operation section 52 of the image forming apparatus 50, control is provided in such a manner that the edit operation is disabled by the image forming apparatus 50, or the job ticket having been edited by the remote operation apparatus 10 is not stored. This arrangement avoids interference between the edit operation by the remote operation apparatus 10 and that by the image forming apparatus 50.

Thus, the system provides control the edit operation of one and the same job ticket by the main-body operation section 52 and that by the remote operation apparatus 10 so that the job ticket is edited in conformity to the preferred edit mode, whereby stable job ticket editing is ensured.

Further, if there is an increase in the number of the edit operations by the main-body operation section 52, printing operation is restricted between edit operations. This will reduce the productivity by the image forming apparatus 50. To solve this problem, the remote-priority editing mode is specified to restrict the edit operation by the main-body operation section 52, whereby the productivity of the image forming apparatus 50 is maintained. In the meantime, the job ticket of the image forming apparatus 50 can be edited through the remote operation apparatus 10. Thus, if there are many operators of the remote operation apparatus 10, there will be an increase in the frequency of job ticket edit operation. In this case, the remote-priority editing mode is specified to reduce the frequency of edit operation by the remote operation apparatus 10, whereby the abuse of job tickets can be avoided. As described above, the present embodiment is arranged to allow either the remote-priority editing mode or main-body-priority editing mode to be specified. This arrangement permits a desired selection between the two modes in conformity to the operation status of the image forming apparatus 50, thereby enhancing convenience for uses.

The result of editing the job ticket is reported to the remote operation apparatus 10. Thus, the operator is informed of whether the job ticket edit operation has succeeded or failed. If it has failed, he or she is notified of the causes of the failure. This arrangement avoids the unfortunate cases where the operator does not know the result of editing the job ticket and unintended printing operation is performed.

The aforementioned description of the present embodiment refers to a preferred example of the image forming apparatus 50 according to the present invention, without being restricted thereto.

For example, in the aforementioned description, when the remote-priority editing mode is selected and a request is issued from the main-body operation section 52 to edit the job ticket being edited or having been edited by the remote operation apparatus 10, a message is issued to warn that the job ticket is being edited or has been edited by the remote operation apparatus 10, and the edit operation is disabled. However, it is also possible to make such arrangements that only a warning message is sent in conformity to the operation environment of the image forming apparatus 50. This arrangement will allows the operator to perform editing by the main-body operation section 52 if required, after confirming the warning message.

Further, the detailed configuration and operation of the image forming apparatus 50 in the present embodiment can be modified as required, without departing from the spirit of the present invention.

In the above-mentioned embodiments, described is the image forming apparatus provided with the main-body-priority editing mode and the remote-priority editing mode, however, the present invention is applicable to the image forming apparatus being not provided with these priority modes. For example, when the job ticket is edited by either one of the remote operation apparatus 10 and the main-body operation section 52, priority may be controlled to be set thereon. Further, when it is structured such that the job ticket is capable to be edited by different ways from the main-body operation section 52, it is possible to control one of the ways to be prioritized to the other.

## Claims

1. An image forming apparatus (50) for forming an image according to attribute information which specifies conditions of a print job, the image forming apparatus (50) being connected to a remote apparatus (10) and comprising:
a memory section (54) for memorizing the attribute information for each print job;
an operation section (52) configured to enable editing operations for the attribute information; and
a control section (51) configured to enable editing operations for the attribute information memorized in the memory section (54) through the operation section (52) and through the remote apparatus (10), and to control the editing operation through the operation section (52) and the editing operation through the remote apparatus (10) for the attribute information;
**characterized in that**
the control section (51) is capable of controlling in a first mode and in a second mode in case of the editing operation of the attribute information of one and the same print job;
wherein the control section (51) is configured to give priority to the editing operation through the operating section (52) over the editing operation through the remote apparatus (10) in the first mode, and
wherein the control section (51) is configured to give priority to the editing operation through the remote apparatus (10) to the editing operation through the operation section (52) in the second mode;
wherein the control section (51) is configured to give priority to the editing operation through remote apparatus (10) over the editing operation through the operation section (52) in the second mode, and not to accept the editing operation through the operation section (52) when the editing operation is executed through the remote apparatus (10); and
wherein in cases where in the first mode, the control section (51) receives requests, from the operation section (52), of the editing operation for the attribute information of the same print job on which the editing operation through the remote apparatus (10) having being conducted, the control section (51)) is configured to cancel the attribute information having been edited through the remote apparatus (10).

2. The image forming apparatus of claim 1, **characterized in that** the control section (51) is configured to store the result of editing operations through the operation section in case of the first mode, and to store the result of the editing operation through the remote apparatus in case of the second mode, in cases where both the editing operation through the operation section (52) and the editing operation through the remote apparatus (10) are conducted for the attribute information of one and the same print job.

3. The image forming apparatus of any one of claims 1 or 2, **characterized in that** the control section (51) is configured to issue a warning display on the operation section (53) in case of the second mode and on the remote apparatus(10) in case of the first mode, in cases where the control section receives requests of the editing operation for the attribute information of one and the same print job from the operation section (52) and from the remote apparatus (10).

4. The image forming apparatus of any one of claims 1 to 3, **characterized in that** the control section (51) is configured to transmit list information of a print job, which is provided with editable attribute information, to the remote apparatus (10), in cases where the control section (51) receives requests of the editing operation for the attribute information from the remote apparatus (10).

5. The image forming apparatus of any one of claims 1 to 4, **characterized in that** the attribute information comprises information of number of prints.

6. The image forming apparatus of any one of claims 1 to 5, **characterized in that** the image forming apparatus (50) is a copying machine provided with a printer, and the remote apparatus (10) is a personal computer.

7. The image forming apparatus of claim 1, **characterized in that** when the attribute information having been edited through the remote apparatus (10) is canceled, the control section (51) is configured to create notice information to the effect that the editing of the attribute information is failed, and transmits the notice information to the remote apparatus (10).

## Patentansprüche

1. Bilderzeugungsvorrichtung (50) zum Erzeugen eines Bildes gemäß Attributsinformationen, welche Bedingungen eines Druckauftrags spezifizieren, wobei die Bilderzeugungsvorrichtung (50) mit einer entfernten Vorrichtung (10) verbunden ist, und aufweisend:
einen Speicherabschnitt (54) zum Speichern der Attributsinformationen für jeden Druckauftrag;
einen Betriebsabschnitt (52), der konfiguriert ist, um Editieroperationen für die Attributsinformationen zu ermöglichen; und
einen Steuerungsabschnitt (51), der konfiguriert ist, um Editieroperationen für die in dem Speicherabschnitt (54) gespeicherten Attributsinformationen durch den Betriebsabschnitt (52) und durch die entfernte Vorrichtung (10) zu ermöglichen, und um die Editieroperation durch den Betriebsabschnitt (52) und die Editieroperation durch die entfernte Vorrichtung (10) für die Attributsinformationen zu steuern;
**dadurch gekennzeichnet, dass**
der Steuerungsabschnitt (51) in der Lage ist, in einer ersten Betriebsart und in einer zweiten Betriebsart zu steuern, für den Fall, dass die Editieroperation der Attributsinformationen ein und denselben Druckauftrag betreffen;
wobei der Steuerungsabschnitt (51) konfiguriert ist, um die Editieroperation durch den Betriebsabschnitt (52) über die Editieroperation durch die entfernte Vorrichtung (10) in der ersten Betriebsart zu priorisieren, und
wobei der Steuerungsabschnitt (51) konfiguriert ist, um die Editieroperation durch die entfernte Vorrichtung (10) zu der Editieroperation durch den Betriebsabschnitt (52) in der zweiten Betriebsart zu priorisieren;
wobei der Steuerungsabschnitt (51) konfiguriert ist, um die Editieroperation durch die entfernte Vorrichtung (10) über die Editieroperation durch den Betriebsabschnitt (52) in der zweiten Betriebsart zu priorisieren, und um die Editieroperation durch den Betriebsabschnitt (52) nicht zu akzeptieren, wenn die Editieroperation durch die entfernte Vorrichtung (10) ausgeführt wird; und
wobei für den Fall, dass in der ersten Betriebsart der Steuerungsabschnitt (51) von dem Betriebsabschnitt (52) Anforderungen der Editieroperation für die Attributsinformationen des selben Druckauftrags, bezüglich welchem die Editieroperation durch die entfernte Vorrichtung (10) durchgeführt worden ist, empfängt, ist der Steuerungsabschnitt (51) konfiguriert, um die Attributsinformationen zu löschen, die durch die entfernte Vorrichtung (10) editiert worden sind.

2. Bilderzeugungsvorrichtung nach Anspruch 1, **dadurch gekennzeichnet, dass** der Steuerungsabschnitt (51) konfiguriert ist, um das Ergebnis von Editieroperationen durch den Betriebsabschnitt für den Fall der ersten Betriebsart zu speichern, und um das Ergebnis der Editieroperation durch die entfernte Vorrichtung für den Fall der zweiten Betriebsart zu speichern, in Fällen, in welchen sowohl die Editieroperation durch den Betriebsabschnitt (52) als auch die Editieroperation durch die entfernte Vorrichtung (10) für die Attributsinformationen von ein und demselben Druckauftrag durchgeführt werden.

3. Bilderzeugungsvorrichtung nach einem der Ansprüche 1 oder 2, **dadurch gekennzeichnet, dass** der Steuerungsabschnitt (51) konfiguriert ist, um eine Warnanzeige auf dem Betriebsabschnitt (53) für den Fall der zweiten Betriebsart und auf der entfernten Vorrichtung (10) für den Fall der ersten Betriebsart auszugeben, in Fällen, in welchen der Steuerungsabschnitt Anforderungen der Editieroperation für die Attributsinformationen von ein und demselben Druckauftrag von dem Betriebsabschnitt (52) und von der entfernten Vorrichtung (10) empfängt.

4. Bilderzeugungsvorrichtung nach einem der Ansprüche 1 bis 3, **dadurch gekennzeichnet, dass** der Steuerungsabschnitt (51) konfiguriert ist, um Listeninformationen eines Druckauftrags, welcher mit editierbaren Attributsinformationen versehen ist, an die entfernte Vorrichtung (10) zu übertragen, in Fällen, in welchen der Steuerungsabschnitt (51) Anforderungen der Editieroperation für die Attributsinformationen von der entfernten Vorrichtung (10) empfängt.

5. Bilderzeugungsvorrichtung nach einem der Ansprüche 1 bis 4, **dadurch gekennzeichnet, dass** die Attributsinformationen Informationen von Druckzahlen aufweisen.

6. Bilderzeugungsvorrichtung nach einem der Ansprüche 1 bis 5, **dadurch gekennzeichnet, dass** die Bilderzeugungsvorrichtung (50) eine Kopiermaschine ist, die mit einem Drucker bereitgestellt ist, und die entfernte Vorrichtung (10) ein Personalcomputer ist.

7. Bilderzeugungsvorrichtung nach Anspruch 1, **dadurch gekennzeichnet, dass**, wenn die Attributsinformationen, die durch die entfernte Vorrichtung (10) editiert worden sind, gelöscht sind, der Steuerungsabschnitt (51) konfiguriert ist, um Benachrichtigungsinformationen dahingehend zu erzeugen, dass das Editieren der Attributsinformationen fehlgeschlagen ist, und die Benachrichtigungsinformationen an die entfernte Vorrichtung (10) überträgt.

## Revendications

1. Dispositif de formation d'image (50) pour former une image en fonction d'informations d'attribut qui spécifient les conditions d'une tâche d'impression, le dispositif de formation d'image (50) étant relié à un dispositif distant (10) et comprenant :
une section de mémoire (54) pour mémoriser les informations d'attribut pour chaque tâche d'impression ;
une section fonctionnelle (52) configurée pour permettre des opérations d'édition des informations d'attribut ; et
une section de commande (51) configurée pour permettre des opérations d'édition des informations d'attribut mémorisées dans la section de mémoire (54) par l'intermédiaire de la section fonctionnelle (52) et par l'intermédiaire du dispositif distant (10) et pour commander l'opération d'édition par l'intermédiaire de la section fonctionnelle (52) et l'opération d'édition par l'intermédiaire du dispositif distant (10) pour les informations d'attribut ;
**caractérisé en ce que**
la section de commande (51) est capable de commander dans un premier mode et dans un second mode dans le cas de l'opération d'édition des informations d'attribut d'une et d'une seule tâche d'impression ;
dans lequel la section de commande (51) est configurée pour donner la priorité à l'opération d'édition par l'intermédiaire de la section fonctionnelle (52) par rapport à l'opération d'édition par l'intermédiaire du dispositif distant (10) dans le premier mode, et
dans lequel la section de commande (51) est configurée pour donner la priorité à l'opération d'édition par l'intermédiaire du dispositif distant (10) par rapport à l'opération d'édition par l'intermédiaire de la section fonctionnelle (52) dans le second mode ;
dans lequel la section de commande (51) est configurée pour donner la priorité à l'opération d'édition par l'intermédiaire du dispositif distant (10) par rapport à l'opération d'édition par l'intermédiaire de la section fonctionnelle (52) dans le second mode, et ne pas accepter l'opération d'édition par l'intermédiaire de la section fonctionnelle (52) lorsque l'opération d'édition est exécutée par l'intermédiaire du dispositif distant (10) ; et
dans lequel, dans les cas où dans le premier mode, la section de commande (51) reçoit des demandes de la section fonctionnelle (52) de l'opération d'édition pour les informations d'attribut de la même tâche d'impression sur laquelle l'opération d'édition par l'intermédiaire du dispositif distant (10) a été exécutée, la section de commande (51) est configurée pour annuler les informations d'attribut ayant été éditées par l'intermédiaire du dispositif distant (10).

2. Dispositif de formation d'image selon la revendication 1, **caractérisé en ce que** la section de commande (51) est configurée pour mémoriser le résultat des opérations d'édition par l'intermédiaire de la section fonctionnelle dans le cas du premier mode, et pour mémoriser le résultat de l'opération d'édition par l'intermédiaire du dispositif distant dans le cas du second mode, dans les cas où à la fois l'opération d'édition par l'intermédiaire de la section fonctionnelle (52) et l'opération d'édition par l'intermédiaire du dispositif distant (10) sont exécutées pour les informations d'attribut d'une et d'une seule tâche d'impression.

3. Dispositif de formation d'image selon l'une quelconque des revendications 1 ou 2, **caractérisé en ce que** la section de commande (51) est configurée pour délivrer un affichage d'avertissement sur la section fonctionnelle (53) dans le cas du second mode et sur le dispositif distant (10) dans le cas du premier mode, dans les cas où la section de commande reçoit des demandes de l'opération d'édition pour les informations d'attribut d'une et d'une seule tâche d'impression provenant de la section fonctionnelle (52) et provenant du dispositif distant (10).

4. Dispositif de formation d'image selon l'une quelconque des revendications 1 à 3, **caractérisé en ce que** la section de commande (51) est configurée pour transmettre au dispositif distant (10) des informations de liste d'une tâche d'impression, qui sont fournies avec des informations d'attributs pouvant être éditées, dans les cas où la section de commande (51) reçoit des demandes de l'opération d'édition pour les informations d'attribut provenant du dispositif distant (10).

5. Dispositif de formation d'image selon l'une quelconque des revendications 1 à 4, **caractérisé en ce que** les informations d'attribut comprennent des informations concernant le nombre d'impressions.

6. Dispositif de formation d'image selon l'une quelconque des revendications 1 à 5, **caractérisé en ce que** le dispositif de formation d'image (50) est une machine copieuse munie d'une imprimante et le dispositif distant (10) est un ordinateur personnel.

7. Dispositif de formation d'image selon la revendication 1, **caractérisé en ce que** lorsque les informations d'attribut ayant été éditées par l'intermédiaire du dispositif distant (10) sont annulées, la section de commande (51) est configurée pour créer des informations d'avertissement ayant pour effet de faire échouer l'édition des informations d'attribut et pour transmettre les informations d'avertissement au dispositif distant (10).
